Europäisches Patentamt

European Patent Office

Office européen des brevets

(11) Numéro de publication: **0 147 309**
**A2**

(12) ## DEMANDE DE BREVET EUROPEEN

(21) Numéro de dépôt: 84402644.3

(51) Int. Cl.⁴: **H 01 M 6/36**

(22) Date de dépôt: 18.12.84

(30) Priorité: 19.12.83 FR 8320284

(43) Date de publication de la demande:
03.07.85 Bulletin 85/27

(84) Etats contractants désignés:
DE GB IT

(71) Demandeur: SOCIETE NATIONALE INDUSTRIELLE
AEROSPATIALE Société dite:
37 Boulevard de Montmorency
F-75781 Paris Cedex 16(FR)

(72) Inventeur: Pathe, Claude
97 rue Gay Lussac
F-92320 Chatillon(FR)

(72) Inventeur: Charnay, Claude
17 rue de Cardinal
F-91380 Chilly Mazarin(FR)

(72) Inventeur: Ferrier, Serge
6bis rue Jean Jaurès
F-91430 Igny(FR)

(72) Inventeur: Riffault, Françoise
10 Résidence de Clos
F-91370 Verrieres-Le-Buisson(FR)

(72) Inventeur: Beaudoin, Nicole
52 Avenue Victor Hugo
F-92140 Clamart(FR)

(72) Inventeur: Floury, Hervé
La Viandrie Saint-Pierre du Chemin
F-85120 La Chataigneraie(FR)

(74) Mandataire: Santarelli, Marc
Cabinet Rinuy et Santarelli 14, avenue de la Grande
Armée
F-75017 Paris(FR)

(54) **Piles thermiques anode de métal alcalin ou alcalino-terreux du type calcium perfectionnées et batteries thermique réalisées au moyen de telles piles.**

(57) Pile thermique comprenant une anode, une cathode, un électrolyte solide et un dispositif thermique d'activation à base d'une composition pyrotechnique conductrice électriquement essentiellement caractérisée par le fait que la cathode (2), l'électrolyte (3) et l'anode (12) forment ensemble une pastille (10), que l'anode (12) est constituée d'une matière réactive (choisie parmi les métaux alcalins et alcalinoterreux) déposée en une couche mince sur un élément métallique (4) présentant une grande surface spécifique rendu solidaire d'un support métallique (5) servant de collecteur de courant, que la cathode (2) comprend une matière réactive choisie parmi les oxydes supérieurs métalliques, les sulfures de métaux et les mélanges de ces oxydes métalliques ou de ces sulfures et qu'enfin, l'électrolyte (3) comprend un mélange eutectique d'halogénures métalliques.

FIG.1

Piles thermiques à anode de métal alcalin ou alcalino-terreux du type calcium perfectionnées et batteries thermiques réalisées au moyen de telles piles

La présente invention concerne des piles thermiques à anode de calcium perfectionnées.

Dans la présente description, on entend par pile thermique un générateur électrochimique fonctionnant à une température élevée (de l'ordre de 600°C) et comprenant une électrode positive et une électrode négative entre lesquelles est disposée une couche d'un électrolyte généralement constitué par une substance solide fusible non conductrice ionique à la température ambiante mais le devenant lors de sa fusion assurée par un dispositif thermique d'activation approprié, produisant ainsi de l'électricité par des réactions électrochimiques entre l'anode et la cathode.

On entendu aussi, plus généralement, par "batterie thermique" tout ensemble comprenant plusieurs générateurs électrochimiques du type ci-dessus rappelé, reliés en parallèle ou en série, des moyens capables de produire la chaleur nécessaire à l'échauffement desdits générateurs et les éventuels moyens d'isolation thermique assurant le maintien en température convenable pendant au moins la durée de fonctionnement.

Ces batteries thermiques sont utilisées comme source d'énergie dans de nombreuses applications notamment celles nécessitant de longues durées de stockage.

Les matériaux le plus couramment utilisés à l'anode appartiennent au groupe des alcalins ou alcalino-terreux, la préférence étant donnée au calcium, bien que le lithium seul ou allié à d'autres métaux puisse aussi être utilisé.

Quant à la cathode, de nombreux oxydes ou sulfures sont préconisés, notamment les chromates de calcium ou de lithium ainsi que le sulfure de fer associés en général avec l'électrolyte utilisé.

Pour ce qui est de ce dernier, celui-ci est en général, un mélange d'halogénures alcalins (tels que chlorure de lithium et chlorure de potassium dont le point de fusion est de 352°C) avantageusement additionnés d'un composé liant du type dit "gélifiant" le plus inerte possible chimiquement vis-à-vis des matériaux anodiques et cathodiques.

En pratique, on connaît diverses formes de réalisation de telles piles et batteries thermiques. C'est ainsi que pour l'anode, une des formes de réalisation possible consiste en un support métallique mince sur lequel est déposée la matière active (métal alcalin ou alcalino-terreux). On a aussi préconisé d'avoir recours en tant que collecteur de courant, soit à des mousses métalliques, soit à des structures poreuses à base de métal fritté (type nickel RANEY), soit à des supports tressés de fibres synthétiques sur lesquels est déposé un métal pour assurer la conduction du courant électrique. Ces différents types d'anodes sont décrits dans les brevets français N° 79 17540, N° 79 20503, N° 80 11080, N° 81 09676, et n° 82 11149. Leur but est de disposer d'une porosité assez fine afin d'avoir un pouvoir de rétention sur la matière active, principalement dans le cas de lithium qui est liquide à la température de fonctionnement de la pile.

On notera au sujet de ces anodes connues que le métal laminé sur un support est toujours épais ; il est aussi lisse ce qui ne permet pas un accrochage facile, tenace ou efficace d'une poudre, même si l'on fait appel à la technique de dépôt sous vide de la matière active telle que le calcium. De plus, on constate toujours l'apparition de courts-circuits aléatoires dus à la formation d'eutectiques par suite d'un phénomène de fusion à la température de fonctionnement de la pile.

Par ailleurs, les inconvénients des autres formes de type mousse métallique ou structure poreuse résident dans leur épaisseur et dans leur mise en oeuvre assez lourde. Elles ne sont pas adaptées à un type d'élément mince. Quant aux fibres synthétiques tressées utilisées comme matériaux d'anodes, leur inconvénient majeur réside dans leur peu de tenue à la température de fonctionnement de la pile thermique.

En ce qui concerne les cathodes connues du type chromate de calcium associé à une anode au calcium, leur principal inconvénient réside dans la résistance interne élevée dans l'élément pile et la solubilité importante dans l'eutectique (LiCl-KCl).

Or, la présente invention vise une pile thermique comprenant une anode, une cathode, un électrolyte solide et une composition pyrotechnique ne présentant pas les inconvénients rappelés ci-dessus, cette pile étant essentiellement caractérisée par le fait que l'anode est constituée d'une matière réactive (choisie parmi les métaux alcalins et alcalino-terreux) déposée en une couche mince sur un élément métallique présentant une grande surface spécifique rendu solidaire d'un support métallique servant de collecteur de courant, que la cathode comprend une matière réactive choisie parmi les oxydes supérieurs métalliques et les sulfures de métaux et les mélanges de ces oxydes métalliques ou de ces sulfures, et qu'enfin, l'électrolyte est un mélange eutectique d'halogénures métalliques.

La description qui va suivre fera mieux ressortir, avec ses autres caractéristiques, la portée et l'intérêt de l'invention :

L'anode d'une pile selon l'invention comprend essentiellement un collecteur de courant pouvant être constitué par exemple d'un clinquant métallique tel que de nickel ou d'acier inoxydable sur lequel est accroché ou rendu solidaire, par tout moyen approprié, un élément métallique présentant une grande surface spécifique tel que, par exemple, une grille ou un métal déployé à mailles ou interstices permettant la pénétration d'une poudre calibrée (telle que celle de l'électrolyte).

Une telle anode présente l'avantage d'une fabrication facile. On peut "accrocher" l'élément métallique de grande surface par une simple opération de soudage par points. En outre, cette conception d'anode permet une adaptation au besoin de la pile en déposant une fine couche du composé de métal alcalin ou alcalino-

terreux (tel que le calcium) sur l'élément de grande surface et son support, exemple de 50 à 200 μ. Son épaisseur est très faible et le "maillage" permet l'accrochage aisé de l'électrolyte en poudre. Cette conception permet de plus une augmentation de la surface effective d'anode et donc une capacité et une énergie massique plus grandes pour la pile.

Un autre avantage réside dans la suppression des courts-circuits qui se produisent avec les autres anodes comprenant un métal alcalin ou alcalino-terreux tel que le calcium. En effet, l'accrochage et la pénétration de la poudre électrolytique sur la grille ou l'élément de grande surface anodique bloquent l'eutectique métallique (tel que calcium-lithium) qui se forme au cours du fonctionnement de la pile. Un tel alliage est normalement gênant dans les conceptions usuelles car il est liquide à la température de fonctionnement de la pile et il a donc tendance à couler le long de l'élément pile thermique.

La présente invention permet également une fabrication d'un élément pile d'un encombrement réduit en épaisseur (0,8 mm par exemple pour une surface de 25 cm²) rendu possible par la pénétration de la poudre dans le "maillage" de l'anode et se présentant comme un ensemble multicouches.

Pour ce qui est de la cathode d'une pile selon l'invention, elle peut avoir toute forme physique connue et comprendre tout composé oxydant (tel qu'un oxyde supérieur métallique comme, par exemple, du chromate de calcium, du chromate de lithium, de l'oxyde de vanadium, de l'oxyde d'uranium) ou un sulfure métallique comme le sulfure de fer ou le sulfure de titane.

Suivant un mode de réalisation particulier, une pile selon l'invention comprendra l'association d'une cathode au bisulfure de fer et d'une anode au calcium. Du fait que le bisulfure de fer est connu pour être conducteur du courant électrique cela confère à la pile thermique une faible résistance interne ainsi que des possibilités de décharge élevée. Contrairement
à une forme de pile connue où le calcium est associé
au chromate de calcium conduisant à une résistance interne élevée et, du fait de la solubilité du chromate
de calcium, à une mauvaise stabilité au cours de la
décharge, la résistance interne d'un telle pile particulière selon l'invention est stable au cours de la
décharge.

En ce qui concerne l'électrolyte qui est à
base d'un mélange d'halogénures alcalins, on citera de
préférence le mélange eutectique de chlorure de lithium
et de chlorure de potassium. Cet électrolyte contiendra
avantageusement un liant en matière inerte pour constituer une masse et augmenter le volume dudit électrolyte
tout en réduisant sa mobilité physique.

Quant à la composition pyrotechnique, celle-
ci pourra être avantageusement, dans la pile selon l'invention, constituée par un mélange oxydo-réducteur
conducteur servant alors aussi de collecteur du courant.

Suivant une forme de réalisation avantageuse
possible d'une pile selon l'invention, on peut lui
conférer la forme d'une seule pastille bicouches ce qui
rend particulièrement simple les manipulations de montage d'une batterie complète par exemple. Actuellement,
l'état de la technique dans ce domaine fait apparaître
plutôt un assemblage de plusieurs pastilles pour avoir
une pile thermique.

L'avantage d'une telle pastille multicouches
réside aussi dans le fait que l'on peut obtenir une pile
thermique "pastillée" de faible épaisseur alors que les
piles thermiques connues ne permettent pas cette
diminution d'encombrement.

La présente invention couvre donc aussi des
batteries thermiques comprenant une pluralité de piles
thermiques dont une au moins est conforme à la présente
invention.

On notera que jusqu'à présent avec, par exemple, un couple bisulfure de fer/aluminium-lithium, de bons résultats pouvaient être obtenus. Toutefois, la fabrication d'un tel élément de pile, en pastille de faible épaisseur,s'est avérée être très difficile. Afin d'utiliser l'avantage du bisulfure de fer qui est sa faible résistance interne en fonctionnement, le calcium est placé du côté anode. Ce couple s'est avéré mieux adapté du point de vûe des performances et de l'encombrement que le couple bisulfure de fer/aluminium-lithium après une adaptation spécifique au niveau du support de l'anode au calcium selon l'invention.

L'invention permet d'obtenir de meilleurs résultats de la pile au niveau de la fiabilité de fonctionnement, par exemple par la suppression de courts-circuits dus à la formation de l'alliage $CaLi_2$ ainsi qu'au niveau du rendement du fait de l'augmentation de la surface active de l'anode.

Ces multiples avantages ressortiront mieux de la description qui va suivre faite en regard des dessins annexés sur lesquels :

- la figure 1 représente schématiquement une pile thermique selon l'invention, en vue éclatée, comprenant un moyen d'activation ; et

- la figure 2 représente schématiquement une batterie thermique selon l'invention.

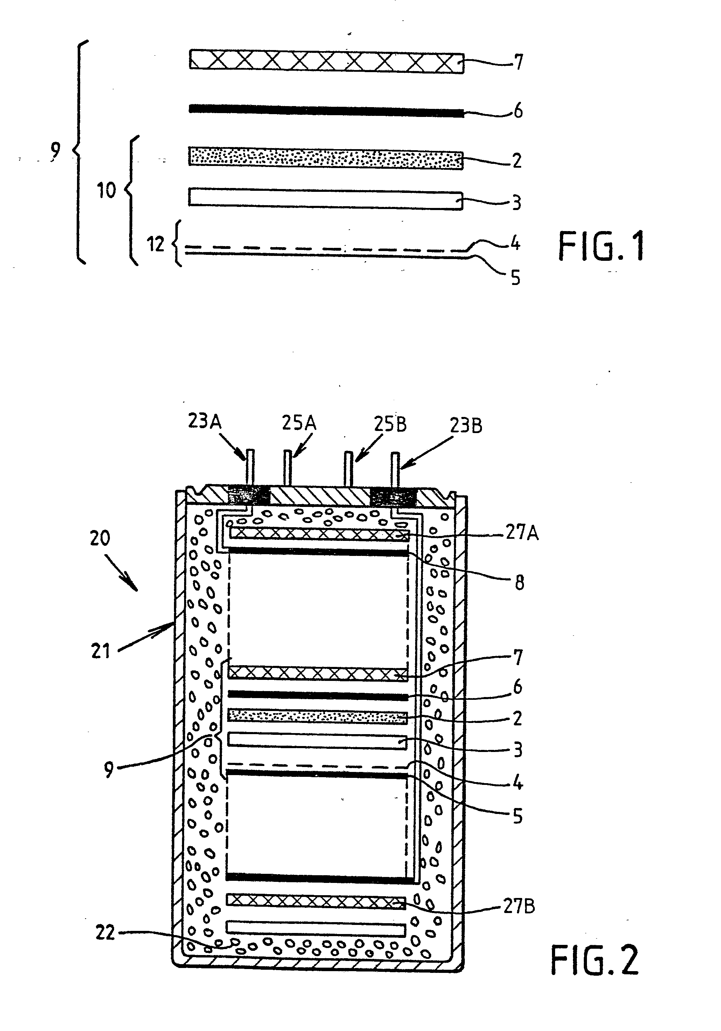

Comme représenté sur la figure 1, une pile thermique 9 comprend une pastille multicouches (10) composée d'une cathode (2), d'un électrolyte (3) et d'une anode (12). Une couche (7) de matière pyrotechnique est associée à la pastille (10) pour l'activation thermique de celle-ci, de façon connue. La cathode (2) est formée par exemple d'une couche de bisulfure de fer comprimée comme matière réactive ; on peut lui associer un clinquant séparateur (6) en nickel ou acier inoxydable, bien que, dans son état de fonctionnement la couche (2) de bisulfure de fer soit elle-même électriquement conductrice. L'électrolyte (3) se présente sous forme d'une couche comprimée de matière active associée à un liant inerte qui peut être de la silice de pyrogénation, de la magnésie ou de l'alumine, cette matière active étant un mélange eutectique de chlorures de lithium et de potassium. Si on le désire, la couche de cathode (2) peut comporter en plus un corps de la matière active d'électrolyte, afin d'augmenter la surface libre de la matière réactive de cathode.

L'anode (12) est constituée d'un clinquant (5) en nickel ou en acier inoxydable auquel est associée une ou plusieurs grille(s) de nickel (4), par exemple. Sur cette anode est déposé le métal alcalin ou alcalino-terreux tel que le calcium comme matière réactive d'anode.

Comme représenté sur la figure 2, une batterie thermique (20) comprend un boîtier creux (21) dans lequel est logée une pluralité de piles thermiques (9) dont une seulement est représentée entièrement, pour la clarté du dessin. Les piles (9) sont bien entendu reliées électriquement en série et le collecteur de courant de cathode (8) de la pile supérieure est relié à une borne (23A) de la batterie (20), tandis que l'anode de la pile inférieure est raccordée à l'autre borne (23B) de la batterie. La batterie (20) comporte également un dispositif d'allumage qui est raccordé à des bornes (25A et 25B) pour permettre l'activation thermique des diverses piles (9) dans la batterie. Une protection thermique (22) est positionnée autour des éléments piles. Des empilements chauffants et thermiquement isolants d'extrémité (27A) et (27B), dits gardes thermiques, maintiennent les valeurs de température nécessaires à l'intérieur de la batterie.

Les diverses anodes illustrées sur le dessin comportent un clinquant en nickel ou en acier inoxydable d'épaisseur 5/100 mm ou 10/100 mm associé à une ou plusieurs grille(s) de nickel. On peut remplacer la ou les grille(s) par du métal déployé. Les mailles de cette grille ne doivent pas être trop petites afin de laisser

8

pénétrer le mélange électrolytique à la compression. L'épaisseur du dépôt de métal alcalin ou alcalino-terreux (calcium) peut être réglée sur ce support selon la capacité demandée à la pile. Cela permet la fabrication d'un élément pile, de faible encombrement, manipulable facilement grâce à sa forme de pastille multicouches, ce qui facilite les empilements pour former une batterie thermique. De plus, cet élément tel que calcium-bisulfure de fer permet des débits élevés grâce à une faible résistance interne de l'élément pile ($\simeq 0,5\,\Omega\,cm^2/$élément).

Il va de soi que la présente invention n'a été décrite qu'à titre purement explicatif et nullement limitatif et que toute modification utile pourra y être apportée sans sortir de son cadre.

9

REVENDICATIONS

1. Pile thermique comprenant une anode, une cathode, un électrolyte solide et un dispositif thermique d'activation à base d'une composition pyrotechnique conductrice électriquement essentiellement caractérisée par le fait que la cathode (2), l'électrolyte (3) et l'anode (12) forment ensemble une pastille (10), que l'anode (12) est constituée d'une matière réactive (choisie parmi les métaux alcalins et alcalinoterreux) déposée en une couche mince sur un élément métallique (4) présentant une grande surface spécifique rendu solidaire d'un support métallique (5) servant de collecteur de courant, que la cathode (2) comprend une matière réactive choisie parmi les oxydes supérieurs métalliques, les sulfures de métaux et les mélanges de ces oxydes métalliques ou de ces sulfures et qu'enfin, l'électrolyte (3) comprend un mélange eutectique d'halogénures métalliques.

2. Pile thermique selon la revendication 1, caractérisée par le fait que l'anode (12) est au calcium.

3. Pile thermique selon la revendication 1 ou 2, caractérisée par le fait que le support métallique (5) est constitué d'un clinquant métallique du type clinquant de nickel ou d'acier inoxydable, que l'élément métallique de grande surface (4) est du type grille ou métal déployé et que l'électroylyte (3) est incorporé sous forme de poudre dans les interstices de cet élément (4).

4. Pile thermique selon l'une quelconque des revendications 1 à 3, caractérisée par le fait que l'électrolyte (3) est un mélange d'halogénures alcalins associé à un liant ou gélifiant inerte.

5. Pile thermique selon l'une quelconque des revendications 1 à 4, caractérisée par le fait que l'électrolyte est l'eutectique LiCl-KCl.

6. Pile thermique selon la revendication 4 ou 5, caractérisée par le fait que le liant ou gélifiant est choisi dans le groupe comprenant la silice, la magnésie et l'alumine.

7. Pile thermique selon l'une quelconque des revendications 1 à 6, caractérisée par le fait que la cathode (2) comprend la matière active sous la forme d'un composé choisi dans le groupe comprenant le sulfure de fer, le chromate de calcium, le chromate de lithium, le pentoxyde de vanadium, l'oxyde d'uranium, le sulfure de titane et les mélanges de tels oxydes ou sulfures.

8. Pile thermique selon l'une quelconque des revendications 1 à 7, caractérisée en ce que la cathode (2) comprend un mélange de matière active et d'électrolyte.

9. Pile thermique selon l'une quelconque des revendications 1 à 8, caractérisé par le fait qu'elle comprend l'association d'une cathode au bisulfure de fer et d'une anode au calcium.

10. Pile thermique selon l'une quelconque des revendications 1 à 9, caractérisée par le fait qu'un séparateur métallique (6) est disposé entre la cathode (2) et le dispositif thermique d'activation (7).

11. Application de plusieurs piles thermiques selon l'une quelconque des revendications 1 à 10, à la réalisation d'une batterie thermique comprenant une pluralité de telles piles (9) logées dans un boîtier (21).

FIG.1

FIG.2